# EUROPÄISCHE PATENTSCHRIFT

(11) **EP 0 680 123 B1**
(45) Veröffentlichungstag und Bekanntmachung des Hinweises auf die Patenterteilung: **12.11.1997**
(21) Anmeldenummer: 95101579.1
(22) Anmeldetag: 07.02.1995
(51) Int. Cl.: H02B 1/30, H02B 1/40

(54) **Schaltschrank für elektrische Anlagen**
Switchgear cabinet for electrical installations
Armoire de commutation pour installation électrique

(30) Priorität: 19.04.1994 DE 4413380
(43) Veröffentlichungstag der Anmeldung: 02.11.1995
(73) Patentinhaber: ELEK GMBH, D-41470 Neuss (DE)
(72) Erfinder: Günther, Wolfgang, D-51373 Leverkusen (DE)
(74) Vertreter: Palgen, Peter, Dr. Dipl.-Phys.

(56) Entgegenhaltungen:
- EP-A- 0 143 718
- WO-A-86/01675
- DE-A- 2 358 798
- DE-U- 1 809 964
- DE-U- 1 828 744
- DE-U- 7 245 356
- DE-U- 8 511 217
- DE-U- 8 805 116
- FR-A- 1 575 650
- FR-A- 2 003 338

## Beschreibung

Die Erfindung bezieht sich auf einen Schaltschrank der dem Oberbegriff des Anspruchs 1 entsprechenden Art.

Derartige Schaltschränke dienen bei Schaltanlagen dazu, Schaltgeräte und Schaltelemente, wie beispielsweise Schütze, Sicherungselemente oder dergleichen oder auch Anzeigeinstrumente, die beispielsweise den Betriebszustand nachgeschalteter Verbraucher charakterisieren, aufzunehmen und übersichtlich und gut zugänglich in einem im Schrankgehäuse aufgestellten und an diesem befestigten Geräteträger anordnen zu können.

Derartige Schaltschränke sind in verschiedenen Ausführungsformen bekannt. Bei relativ großen Schaltschränken, die zur Aufnahme schwerer Schaltelemente geeignet sein sollen, finden meist kastenförmige Gehäuse Verwendung, die einen aus einzelnen sich entlang der Gehäusekanten erstreckenden Profilen bestehenden Gerüstrahmen aufweisen, an welchem der Geräteträger mittels Tragschienen befestigt ist und bei welchem die Seitenteile, der Boden und der Deckel durch in den Gerüstrahmen eingesetzte Blenden vervollständigt werden.

Nachteilig ist bei derartigen Schaltschränken, daß diese aus einer Vielzahl von Einzelteilen bestehen und damit aufwendig in ihrer Herstellung und ihrer Montage sind.

Bei einer anderen bekannten Ausführungsform von Schaltschränken, wie sie insbesondere für kleinere, leichtere Schaltgeräte Verwendung finden, bestehen die Wandungsteile des Gehäuses auf Blechformteilen, welche miteinander verschweißt werden, bevor der Geräteträger an ebenfalls eingeschweißten Tragschienen in den Schaltschrank eingebaut wird. Solche Schaltschränke finden - mit Montageösen ausgerüstet - bevorzugt als Wandschränke Verwendung.

Nachteilig ist bei derartigen Schaltschränken, daß die für den Korrosionsschutz notwendige Lackierung erst nach dem Verschweißen der Wandungsteile zum vollständigen Gehäuse erfolgen kann, was insbesondere bei Anwendung der umweltfreundlichen Pulverbeschichtungstechnologie durch schlecht erreichbare tote Gehäuseecken stark erschwert wird. Auch ist es von Nachteil, daß ein derartiger Schaltschrank zum Zwecke der Lagerung oder des Transports nicht zerlegt werden kann, wodurch sich die Transport- und Lagerkosten erhöhen. Auch haben diese Schaltschränke ein recht hohes Eigengewicht, da die gesamte Gewichtslast des mit elektrischen Schaltelementen bestückten Geräteträgers von dem Schrankgehäuse aufgenommen werden muß.

Aus der DE-U 72 45 356 ist ein Schrank für elektrische Schaltungsanordnungen bekannt, dessen Gehäuse aus Kunststoff einteilig hergestellt ist. Um es von dem Gewicht der durch es umschlossenen Schaltungsanordnungen zu entlasten, sind in die Rückwand und/oder die Seitenwände Verbindungsbauteile fest eingeformt, die einerseits der Befestigung des Schrankes an einer Bauwerkswand, anderseits der Festlegung einer Montageschiene dienen.

Nachteilig ist bei diesem Kunststoffschrank, daß er nicht zerlegbar ist und somit sein Transport bzw. Lagervolumen relativ groß ist. Auch ist dieser Schaltschrank für die Aufnahme relativ schwerer Schaltelemente nicht geeignet, da stets ein Teil des Gewichts der Schaltelemente in das Gehäuse eingeleitet wird.

Der Erfindung liegt daher die Aufgabe zugrunde, einen Schaltschrank der dem Oberbegriff des Anspruchs 1 entsprechenden Art zu schaffen, bei dem die genannten Nachteile verbessert sind. Des weiteren soll der Schaltschrank aus einem Minimum an Teilen bestehen und leicht - gegebenenfalls vom Kunden - montierbar sein, ohne daß dabei die Funktionssicherheit des Schaltschranks leidet.

Diese Aufgabe wird durch die in Anspruch 1 wiedergegebene Erfindung gelöst.

Dadurch, daß an der Rückwand des Schrankgehäuses im Bereich der Ecken auf der die rückseitige Innenwandung des Schrankgehäuses bildenden Seite vorkragende Befestigungselemente angeordnet sind, welche Gewindebohrungen umfassen, in welche die Rückwand durchgreifende Schrauben eingedreht sind, wobei mittels der Befestigungselemente jeweils ein Endbereich einer horizontalen und einer vertikalen Tragschiene festgelegt ist, wird die Rückwand durch die Tragschienen rundherum stabilisiert. Die Tragschienen können entweder als Teil des Geräteträgers selbst oder als Montageschiene für den Geräteträger ausgebildet sein. Da zumindest ein Teil der Schrauben zugleich der Befestigung der Montageösen dient, wird die Gewichtskraft des an einer Wand mit diesen befestigten Schranks direkt von den Tragschienen über die Befestigungselemente in die Montageösen eingeleitet und von der Wand aufgenommen, so daß der Rückwand und den Seitenwänden keinerlei tragende Funktionen zukommen, sondern diese lediglich der Abdeckung des Geräteträgers und der in diesen montierten Schaltgeräte dienen. Besonders verwindungssteif und daher auch zur Aufnahme von relativ schweren Schaltelementen geeignet ist der Schaltschrank durch die U-profilförmige Ausbildung der Tragschienen, in welche an den Befestigungselementen vorgesehene Befestigungsschenkel eingreifen, da durch diese Maßnahmen die Tragschienen nicht nur kraft-, sondern auch formschlüssig mit den Befestigungselementen zusammenwirken.

Bei einer bevorzugten Ausführungsform des Schaltschranks sind nach Anspruch 2 die Seitenwände, der Boden und der Deckel des erfindungsgemäßen Schaltschranks aus Blechen gefertigt, bei denen zumindest einige der Kanten, vorzugsweise alle Kanten der Bleche abgewinkelte Bereiche aufweisen, so daß an jeder Gehäusekante ein abgewinkelter Bereich mit der jeweils angrenzenden Wandung überlappt. Da Mittel zum wahlweisen Festlegen der angrenzenden Wandungen an den abgewinkelten Bereichen vorgesehen sind, können die Seitenteile, der Boden und der Deckel am Einsatzort des Schaltschranks montiert werden. Da ihnen keinerlei tragende Funktion bezüglich des Geräteträgers zukommt, kann die Montage auch nach seiner InstaLLATION BZW: DER Installation der Schaltgeräte erfolgen, wodurch diese zum Einbau von allen Seiten besonders gut zugänglich sind.

Eine besonders bevorzugte Ausführungsform des Schaltschranks gemäß Anspruch 3 umfaßt mindestens eine Fronttür, die mit Scharnierelementen ausgestattet ist, welche an dem fertig montierten Gehäuse anbringbar sind.

Bei einer weiteren bevorzugten Ausführungsform des Schaltschranks gemäß Anspruch 4 sind die Mittel zum Festlegen der Seitenteile an dem Boden bzw. dem Deckel selbstschneidende Schrauben, da hierdurch eine sichere, kostengünstige und wiederlösbare Befestigung der Teile aneinander gewährleistet ist.

Bei einer bevorzugten Ausführungsform des erfindungsgemäßen Schrankes gemäß Anspruch 5 werden die Seitenteile, der Boden und der Deckel mit Hilfe mindestens einiger in ein Befestigungselement eingedrehten Schrauben an der Rückwand angebracht. Durch diese Ausgestaltung ist der Schaltschrank mit einem Minimum an Teilen montagefähig.

Bei einer besonders vorteilhaften Ausgestaltung des Schaltschranks gemäß Anspruch 6 ist sowohl der Deckel als auch der Boden jeweils an der Vorderkante mit einer zweifach zum Gehäuseinneren hin rechtwinklig gefalzten Abwinkelung versehen, so daß der die freie Kante der Abwinkelung bildende Bereich in einer zu derjenigen des Bodens bzw. des Deckels parallelen Ebene verläuft und nach vorn über die Seitenwände übersteht. Weist der erfindungsgemäße Schaltschrank weiterhin die Merkmale der Ansprüche 7 und 8 auf, so kann die Tür bzw. können die Türen mit Hilfe von Steckscharnieren an dem Gehäuse angeschlagen werden, welche Zapfen umfassen, die in die entsprechenden Bohrungen eingreifen, die in dem die freie Kante bildenden Bereich der Abwinkelungen vorgesehen sind.

Bei einer besonders bevorzugten Ausführungsform des erfindungsgemäßen Schaltschranks nach Anspruch 9 sind die Zapfen der Steckscharniere wahlweise in ihrer Längsrichtung derart verlagerbar, daß sie vollständig in die Grundfläche der Tür bzw. der Türen verbleiben. Dadurch kann sowohl das Gehäuse des Schaltschranks vollständig montiert werden als auch die Steckscharniere in den Türen befestigt werden, bevor diese an dem Gehäuse des Schaltschranks angeschlagen werden.

Bei einer besonders bevorzugten Ausführungsform des erfindungsgemäßen Schaltschranks gemäß Anspruch 10 sind die Zapfen der Steckscharniere in ihren beiden Stellungen, d.h. über die obere bzw. untere Kante der Tür vorstehend oder vollständig in der Grundfläche der Tür verbleibend, festlegbar. Durch dieser Ausgestaltung können die Steckscharniere bei demjenigen Teil einer Doppeltür, der nicht mit einem Schließmechanismus versehen ist, als Verriegelungselemente dienen.

Eine weitere, bevorzugte Ausführungsform des erfindungsgemäßen Schaltschranks ist Gegenstand des Anspruchs 11. Bei dieser sind die Innenflächen der Seitenteile, des Bodens und des Deckels vollständig durch Kunststoff-Innenprofile abgedeckt. Die Kunststoff-Innenprofile weisen eine Form auf, die sie an den schutzisolierten Teilen von an dem Geräteträger montierten Schaltelementen oder Abdeckhauben, die den Seitenwänden bzw. dem Boden und dem Deckel zugewandt sind, anliegen läßt. Durch diese Kunststoff-Innenprofile sind einerseits der Geräteträger und die in ihm montierten Schaltgeräte wirksam gegen Berührungen ihrer stromführenden Teile geschützt, andererseits wird eine vollständige Schutzisolierung der Seitenteile, des Bodens und des Deckels durch die isolierende Abdeckung erzielt.

Die Kunststoff-Innenprofile können gleichzeitig der Ausbildung von Türanschlägen dienen, wenn sie durchgehende, nach vorn vorstehende Kanten aufweisen, an denen die Tür oder die Türen im geschlossenen Zustand anliegen (Anspruch 12).

Der Innenraum des Schaltschranks kann auf einfache Weise gegen die Umgebung abgedichtet werden, wenn gemäß Anspruch 13 an den vorderen Kanten der Kunststoff-Innenprofile flexible Dichtlippen vorgesehen sind.

Komplett schutzisoliert ist der erfindungsgemäße Schaltschrank dann, wenn gemäß Anspruch 14 die Rückwand ebenfalls aus Kunststoff hergestellt ist und zur Festlegung der Befestigungselemente Kunststoffschrauben verwendet werden. Für die Rückwand findet vorzugsweise recyklierter Kunststoff Verwendung. Wegen der vollständigen Schutzisolierung dieses bevorzugten Ausführungsbeispiels kann auf eine Erdung des Gehäuses und der Tür verzichtet werden.

Besonders kostengünstig herzustellende Ausführungsformen des erfindungsgemäßen Schaltschranks, bei denen für das rechte und linke Seitenteil einerseits und für dem Boden und dem Deckel baugleiche Bauteile Verwendung finden, sind Gegenstand der Ansprüche 15 und 16.

In der Zeichnung ist ein Ausführungsbeispiel des erfindungsgemäßen Schaltschranks schematisch illustriert.

Es zeigen:
Fig. 1 einen erfindungsgemäßen Schaltschrank mit einer Doppeltür in einer Ansicht von vorn (Ansicht A in Fig. 2);
Fig. 2 denselben Schaltschrank in einer Ansicht von oben (Ansicht B in Fig. 1);
Fig. 3 denselben Schaltschrank in einer Seitenansicht gemäß Fig. 1 von links (Ansicht C in Fig. 1);
Fig. 4 eine Ansicht eines Steckscharniers (Ansicht D in Fig. 5);
Fig. 5 eine weitere Ansicht des Steckscharniers (Ansicht E in Fig. 4);
Fig. 6 eine Ansicht desselben Steckscharniers von oben (Ansicht F in Fig. 4);
Fig. 7 einen für den Einsatz in diesem Steckscharnier geeigneten Stift sowie
Fig. 8 ein die Innenflächen der Seitenteile, des Bodens und des Deckels vollständig abdeckendes Kunststoff-Innenprofil im Querschnitt.

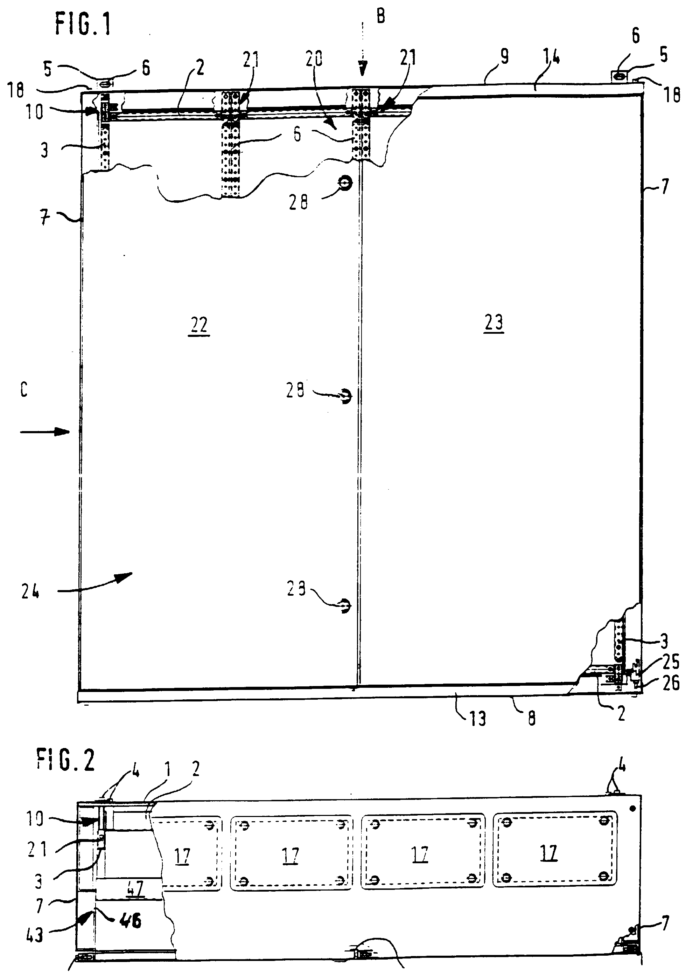

Wenn im Folgenden von "oben" bzw. "unten" die Rede ist, so ist die in Fig. 1 dargestellte, aufrechte Betriebsstellung des erfindungsgemäßen Schaltschranks gemeint. Die Angabe "vorn" bezieht sich auf die Türseite des Schaltschranks, Angaben wie "links" und "rechts" beziehen sich auf eine Betrachtung des Schaltschranks von vorn.

Der in den Fig. 1, 2 und 3 als Ganzes mit 100 bezeichnete Schaltschrank umfaßt eine plattenförmige Rückwand 1, welche aus Kunststoff - vorzugsweise recykliertem Kunststoff - hergestellt ist. In der Nähe der Ecken der Rückwand 1 sind auf der dem Inneren des Schaltschranks 100 zugewandten Seite Befestigungselemente 10 vorgesehen, welche der Anbringung horizontaler und vertikaler Tragschienen 2,3 dienen. Die Befestigungselemente 10 weisen senkrecht zur Rückwand 1 verlaufende Gewindebohrungen auf, in welche einerseits sich durch entsprechende Löcher in der Rückwand hindurcherstreckende, der Verankerung der Befestigungselemente 10 an der Rückwand 1 dienende Kunststoffschrauben 4 eingedreht sind, welche andererseits auf der gegenüberliegenden Seite die Montage der Tragschienen 2,3 durch einfaches Anschrauben ermöglichen. Bei den in der Nähe der oberen Ecken der Rückwand angeordneten Befestigungselementen 10 dienen die Kunststoffschrauben 4 zugleich der Befestigung jeweils einer Montageöse 5.

Die Montageösen 5 erlauben eine hängende Befestigung des Schaltschranks an einer vertikalen Wand. Sie sind aus Flachmaterial hergestellt und umfassen Löcher zum Durchtritt der Kunststoffschrauben 4 und jeweils ein Auge 6, welches oberhalb der Oberkante der Rückwand 1 angeordnet ist und dem Anhängen des Schrankes an in der vertikalen Wandung verankerte Haken, die in der Zeichnung nicht dargestellt sind, dient.

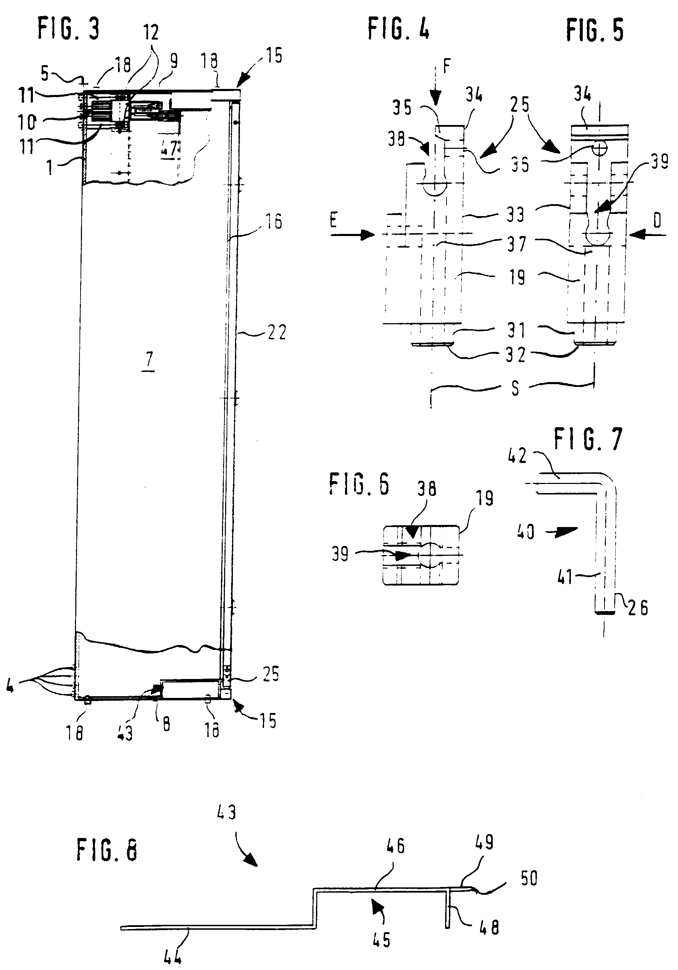

Das in den Fig. 1, 2 und 3 dargestellte Ausführungsbeispiel des erfindungsgemäßen Schaltschranks 100 weist sich senkrecht von der Rückwand 1 in den Innenraum des Schaltschranks 100 erstreckende Befestigungsschenkel 11 auf, welche in die als U-Profile ausgebildeten Tragschienen eingreifen und entweder der Verankerung einer horizontalen Tragschiene 2 oder einer vertikalen Tragschiene 3 dienen. Wie insbesondere aus Fig. 2 und 3 ersichtlich, sind bei dem dargestellten Ausführungsbeispiel an denjenigen Schenkeln, die der Festlegung der vertikalen Montageschienen 3 dienen, diese Schenkel verlängernde Distanzstücke 12 vorgesehen, wodurch ein zusätzlicher Abstand zwischen den Montageschienen und der Rückwand 1 erzeugt wird, welcher zum Verlegen von Anschlußkabeln unter Umständen benötigt wird.

Wie in Fig. 1 ersichtlich, dienen die vertikalen Tragschienen 3 gleichzeitig der Ausbildung äußerer vertikaler Traversen des eigentlichen Geräteträgers 20. Dieser umfaßt weitere vertikale Traversen 6, die als Doppeltraversen ausgebildet sind und mit in ihrer Bauart den Befestigungselementen 10 entsprechenden Verbindungselementen 21 unter Einsatz von Distanzstücken an den horizontalen Tragschienen 2 derart angebracht sind, daß sie mit den vertikalen Tragschienen 3 in einer Ebene liegen.

Der Schaltschrank 100 besitzt Seitenwände 7, welche aus mit einem Korrosionsschutz versehenen Blechtafeln bestehen, deren Kanten um 90° abgewinkelt sind. Für das rechte und linke Seitenteil finden baugleiche Bauteile Verwendung.

Der Boden 8 und der Deckel 9 werden ebenfalls von baugleichen Bauteilen gebildet, die ebenfalls aus korrosionsgeschützten Blechteilen bestehen, wobei deren hintere Kante sowie die Seitenkanten ebenfalls um 90° abgewinkelte Bereiche aufweisen. Die Vorderkanten 13,14 des Bodens 8 bzw. des Deckels 9 werden jeweils durch eine zweifach zum Gehäuseinneren hin rechtwinklig gefalzte Abwinkelung 15 gebildet, wie insbesondere in Fig. 3 am Beispiel des Bodens 8 ersichtlich ist. Der Boden 8 und der Deckel 9 besitzen eine Tiefe, die die Abwinkelung über die Vorkanten 16 der Seitenteile 7 überstehen läßt.

Am Boden 8 und am Deckel 9 sind weiterhin nicht näher beschriebene Durchführungsflansche 17 vorgesehen, welche der Durchführung von Kabeln zu Verbrauchern oder Spannungsquellen dienen.

Zur Montage werden die Seitenteile 7, der Boden 8 und der Deckel 9 an der Rückwand 1 derart aufgesetzt, daß die hinteren Abwinkelungen der Seitenteile 7 des Bodens 8 bzw. des Deckels 9 die Rückwand hintergreifen. Der Festlegung dienen die dem oberen bzw. dem unteren Rand der Rückwand 1 nächstliegenden Kunststoffschrauben 4, die sich durch entsprechende, in den Abwinkelungen vorgesehene Bohrungen erstrecken.

Die Seitenteile 7 sind mit Hilfe von selbstschneidenden Schrauben 18, die durch entsprechende, in den Boden 8 bzw. den Deckel 9 eingearbeitete Lochungen in eine obere bzw. untere Abwinkelung der Seitenteile 7 eingeschraubt sind, befestigt.

Der in den Fig. 1, 2 und 3 dargestellte Schaltschrank 100 umfaßt eine aus den beiden Türflügeln 22,23 bestehende Fronttür 24. Die Türflügel 22,23 sind mit Hilfe von Steckscharnieren angeschlagen, welche Zapfen 26 umfassen, die in Bohrungen 27 eingreifen, welche in den den Türflügeln 22,23 zugewandten Bereichen der Abwinkelungen 15 vorgesehen sind.

Die Türflügel 22,23 sind ebenfalls aus Blechtafeln gefertigt, deren Kanten abgewinkelt sind. Der in Fig. 1 links dargestellte Türflügel 22 ist mit Schlössern 28 ausgestattet, welche im geschlossenen Zustand der Tür 24 einen an dem rechten Türflügel vorgesehenen Anschlag 29 hintergreifen. Der Türflügel 23 ist an seiner dem Türflügel 22 zugewandten Seite an seiner oberen und unteren Kante mit Verriegelungselementen 30 ausgestattet, welche einen Zapfen umfassen, der zum Verriegeln des Türflügels 23 wahlweise in entsprechende, in den Abwinkelungen 15 vorgesehene Bohrungen einschiebbar ist.

Bei dem in Fig. 1, 2 und 3 dargestellten Schaltschrank finden als Steckscharniere und Verriegelungselemente Teile gleicher Bauart Verwendung. Es soll nun im Folgenden die Funktionsweise eines derartigen Bauteils am Beispiel eines Steckscharnieres 25 erläutert werden.

Das in den Fig. 4, 5 und 6 dargestellte Steckscharnier 25 besteht aus einem Kunststoffbauteil 19, welches an seinem gemäß Fig. 4 und 5 unteren Ende einen zylindrischen Fortsatz 31 aufweist, über dessen Stirnfläche 32 sich das Steckscharnier 25 am Schrankgehäuse abstützt. Der zylindrische Fortsatz 31 ragt also durch eine in eine Abwinkelung der Türflügel 22,23 vorgesehene Bohrung hindurch, so daß beim Öffnen und Schließen der Türflügel 22,23 keine Reibung zweier Metallteile aufeinander erfolgt.

An den zylindrischen Fortsatz 31 schließt sich nach oben ein einen etwa quaderförmigen Querschnitt aufweisender Bereich 33 an, dessen oberes Ende ein Fortsatz 34 mit einem Vorsprung 35 bildet. In dem Fortsatz 34 ist eine Querbohrung 36 eingearbeitet, welche der Aufnahme einer Schraube zur Befestigung des Steckscharniers 25 an dem Türflügel 22 und 23 dient.

In Richtung der durch das Steckscharnier 25 vorgegebenen Schwenkachse S erstreckt sich durch das Kunststoffbauteil 19 eine zentrale Längsbohrung 37, welche zentral in den zylindrischen Fortsatz 31 mündet. Im oberen Bereich der Längsbohrung 37 sind zwei zueinander senkrecht angeordnete Aussparungen 38,39 vorgesehen, deren untere Begrenzungen verschieden nah an den zylindrischen Fortsatz 31 heranreichen. Die Breite der Aussparungen 38,39 entspricht dem Durchmesser der Längsbohrung 37, wobei die Aussparungen 38,39 jedoch in ihrem unteren Bereich eine Verengung aufweisen, so daß ihre Form an diejenige eines umgekehrten Schlüsselloches erinnert.

Den Zapfen 26 des Steckscharniers 25 bildet ein abgewinkelter Stift 40, welcher mit seinem längeren Schenkel 41 in die Längsbohrung 37 einschiebbar ist (siehe Fig. 7). Während des Einschiebvorganges des Stiftes 40 in das Kunststoffbauteil 19 wird der Vorsprung 35 elastisch weggedrückt, wodurch der einmal eingesetzte Stift 40 unverlierbar in der Längsbohrung 37 ruht. Durch die Aussparungen 38 und 39 kann der Stift 40 in zwei verschiedenen Stellungen arretiert werden: Wird der kürzere Schenkel 42 in Richtung der Aussparung 38 verlagert, so rastet der Stift 40 in einer Stellung ein, bei dem sein längerer Schenkel 41 nicht aus dem Fortsatz 31 hervorragt. Wird der Schenkel 42 aus der Aussparung 38 hinausgeschoben und um 90° gedreht, so kann er in die Aussparung 39 eingeschoben werden, deren untere Begrenzungsfläche dem Fortsatz 31 näher liegt. In dieser Stellung ragt der Schenkel 41 des Stiftes 40 aus dem unteren Fortsatz heraus und das herausragende Ende bildet den Zapfen 26.

Durch Verwendung dieser Steckscharniere 25 wird ein einfacher Einbau der Türflügel 22,23 in das ansonsten fertig montierte Gehäuse des Schaltschranks 100 ermöglicht. Auch finden - wie bereits erläutert - die Steckscharniere 25 als Verriegelungselemente an dem nicht mit Schlössern versehenen Türflügel 23 Verwendung.

Die Innenflächen der Seitenteile 7 sowie des Bodens 8 und des Deckels 9 sind vollständig von einem Kunststoff-Innenprofil 43 abgedeckt. Das Kunststoff-Innenprofil 43 umfaßt einen ebenen Bereich 44, welcher im hinteren Bereich des Gehäuses direkt an den Innenflächen der Seitenwandungen 7, des Bodens 8 und des Deckels 9 anliegt. An dem Bereich 44 schließt sich ein zum Gehäuseinneren hin erhabener Bereich 45 an, dessen die Seitenfläche 46 bildende Wandung in einer zum Bereich 44 parallelen Ebene liegt.

Wie aus Fig. 2 ersichtlich, liegt die Wandung 46 seitlich direkt an einer Abdeckhaube 47 oder an einem isolierten Frontbereich eines in der Zeichnung nicht dargestellten Schaltelements an, so daß der gesamte, stromführende Bereich des Schaltschranks von vorn nicht zugänglich ist. Zusammen mit den Kunststoffschrauben 4 ist der Schaltschrank durch Verwendung der Kunststoffprofile 43 vollständig schutzisoliert.

An der den türseitigen Abschluß des Profils bildenden Fläche 48 ist eine vorkragende Anlagekante 49 angeformt, die einerseits der Ausbildung eines rundum vorhandenen Türanschlags dient, andererseits durch eine an der Anlagekante vorgesehene Dichtlippe 50 bei geschlossenen Türflügeln 22,23 den Innenraum des Schaltschranks 100 gegen die Umgebung abdichtet.

## Patentansprüche

1. An einer vertikalen Wand anbringbarer Schaltschrank (100) für elektrische Anlagen,
mit einem kastenförmigen Gehäuse, welches eine im wesentlichen ebene Rückwand (1), Seitenwände (7), Boden (8) und Deckel (9) umfaßt und mit mindestens einer Fronttür (24) verschließbar ist,
mit einem im Schrankgehäuse angeordneten aufrechten Geräteträger (20) zur Montage von elektrischen Schaltelementen und Berührungsschutzeinrichtungen,
mit an der Rückwand (1) angeordneten Montageösen (5) zur Anbringung des Schaltschranks (100) an einer Wand
und mit an der Rückwand (1) des Schrankgehäuses im Bereich der Ecken auf der die rückseitige Innenwandung des Schrankgehäuses bildenden Seite angeordneten, der Festlegung von Tragschienen (2,3) dienenden Befestigungselementen (10), welche Gewindebohrungen umfassen, in welche die Rückwand (1) durchgreifende Schrauben (4) eingedreht sind, von denen zumindest ein Teil zugleich der Befestigung der Montageösen (5) dient,
**dadurch gekennzeichnet**,
daß die Tragschienen (2,3) U-profilförmig ausgebildet sind,
daß die Befestigungselemente (10) sich von der Rückwand (1) in den Innenraum des Schaltschranks erstreckende Befestigungsschenkel (11) aufweisen, welche in die U-profilförmigen Tragschienen (2,3) eingreifen,
daß mit jedem Befestigungselement (10) jeweils ein Endbereich einer horizontalen und einer vertikalen Tragschiene (2,3) festgelegt ist
und daß die Tragschienen entweder als Teil des Geräteträgers (20) selbst oder als Montageschiene für den Geräteträger ausgebildet sind.

2. Schaltschrank nach Anspruch 1, **dadurch gekennzeichnet**, daß die Seitenwände (7), der Boden (8) und der Deckel (9) aus Blechen bestehen und zumindest einige der Kanten, vorzugsweise alle Kanten der Bleche abgewinkelte Bereiche aufweisen, so daß an jeder Gehäusekante ein abgewinkelter Bereich mit der jeweils angrenzenden Wandung überlappt und daß Mittel zum wahlweisen Festlegen der angrenzenden Wandungen an den abgewinkelten Bereichen vorgesehen sind.

3. Schaltschrank nach Anspruch 1 oder 2, **dadurch gekennzeichnet**, daß die mindestens eine Fronttür (24) mit an dem fertig montierten Gehäuse anbringbaren Scharnierelementen anschlagbar ist.

4. Schaltschrank nach einem der Ansprüch 1 bis 3, **dadurch gekennzeichnet**, daß die Mittel zum Festlegen der Seitenteile an dem Deckel und an dem Boden selbstschneidende Schrauben (18) sind.

5. Schaltschrank nach einem der Ansprüche 1 bis 4, **dadurch gekennzeichnet**, daß die Seitenteile (7), der Boden (8) und der Deckel (9) mittels zumindest einiger der in die Befestigungselemente eingedrehten Schrauben (4) an der Rückwand befestigt sind.

6. Schaltschrank nach einem der Ansprüche 1 bis 5, **dadurch gekennzeichnet**, daß der Deckel (9) und der Boden (8) jeweils an der Vorderkante eine zweifach zum Gehäuseinneren hin rechtwinklig gefalzte Abwinkelung (15) aufweisen, so daß der die freie Kante der Abwinkelung bildende Bereich in einer zu derjenigen des Bodens bzw. des Deckels parallelen Ebene verläuft und nach vorn über die Seitenwände (7) übersteht.

7. Schaltschrank nach einem der Ansprüche 1 bis 6, **dadurch gekennzeichnet**, daß in dem die freie Kante bildenden Bereich der Abwinkelungen (15) zumindest an seinen den Seitenteilen (7) zugewandten Enden Bohrungen vorgesehen sind.

8. Schaltschrank nach Anspruch 7, **dadurch gekennzeichnet**, daß die Tür oder die Türen auf ihrer angeschlagenen Seite mit Steckscharnieren (25) ausgerüstet sind, die Zapfen (26) umfassen, welche über die obere bzw. untere Kante der Tür oder der Türen vorstehen und in die Bohrungen eingreifen.

9. Schaltschrank nach Anspruch 7, **dadurch gekennzeichnet**, daß die Zapfen (26) der Steckscharniere (25) wahlweise in ihrer Längsrichtung derart verlagerbar sind, daß sie vollständig in der Grundfläche der Tür bzw. der Türen verbleiben.

10. Schaltschrank nach Anspruch 9, **dadurch gekennzeichnet**, daß die Zapfen (26) in beiden Stellungen festlegbar sind.

11. Schaltschrank nach einem der Ansprüche 1 bis 10, **dadurch gekennzeichnet**, daß die Innenflächen der Seitenteile (7), des Bodens (8) und des Deckels (9) vollständig durch Kunststoff-Innenprofile (43) überdeckt sind.

12. Schaltschrank nach Anspruch 11, **dadurch gekennzeichnet**, daß die Kunststoff-Innenprofile (43) durchgehende, nach vorn vorstehende Kanten (49) aufweisen, an denen die Tür oder die Türen im geschlossenen Zustand anliegen.

13. Schaltschrank nach Anspruch 12, **dadurch gekennzeichnet**, daß an den vorderen Kanten (49) der Kunststoff-Innenprofile flexible Dichtlippen (50) vorgesehen sind.

14. Schaltschrank nach Anspruch 13, **dadurch gekennzeichnet**, daß die Rückwand (1) aus, vorzugsweise rezykliertem, Kunststoff besteht und daß zur Festlegung der Befestigungselemente (10) Kunststoffschrauben verwendet werden.

15. Schaltschrank nach einem der Ansprüche 1 bis 14, **dadurch gekennzeichnet**, daß für das rechte und linke Seitenteil baugleiche Bauteile Verwendung finden.

16. Schaltschrank nach einem der Ansprüche 1 bis 15, **dadurch gekennzeichnet**, daß für den Boden und den Deckel baugleiche Bauteile Verwendung finden.

## Claims

1. Switchgear cabinet (100) for electrical equipment for mounting on a vertical wall,
with a box-shaped housing comprising a substantially flat back wall (1), side walls (7), floor (8) and roof (9) and can be closed by at least one front door (24),
with an upright equipment carrier (20) arranged in the cabinet housing for mounting electric switch elements and devices for protecting against inadvertent contact,
with mounting eyes (5) arranged on the rear wall (1) for mounting the switchgear cabinet (100) on a wall
and with attachment elements (10) arranged on the back wall (1) of the cabinet housing in the region of the corners on the side which forms the inside back wall of the cabinet housing, and serving for the attachment of supporting rails (2, 3), the attachment elements (10) having screw-threaded bores into which screws (4) which pass through the back wall (1) are inserted, at least some of the screws serving at the same time for the attachment of the mounting eyes (5),
characterised in that
the supporting rails (2, 3) are of U-shaped profile,
that the attachment elements (10) have attachment limbs which extend from the back wall (1) into the interior of the Switchgear cabinet and engage in the U-section supporting rails (2, 3),
that a respective end region of a horizontal supporting rail and a vertical supporting rail (2, 3) is secured to each attachment element (10)
and that the supporting rails are formed either as part of the equipment carrier (20) itself or as mounting rails for the equipment carrier.

2. Switchgear cabinet according to claim 1, characterised in that the side walls (7), the floor (8) and the roof (9) are made of sheet metal and at least some of the edges, preferably all the edges, of the sheet metal have flanged regions so that at each edge of the housing a flanged region overlaps the respective adjacent wall and that means are provided for securing at will the adjacent walls to the flanged regions.

3. Switchgear cabinet according to claim 1 or 2, characterised in that the at least one front door (24) is engaged by hinge elements mountable on the ready-assembled housing.

4. Switchgear cabinet according to one of claims 1 to 3, characterised in that the means for attaching the side portions to the roof and to the floor are self-tapping screws (18).

5. Switchgear cabinet according to one of claims 1 to 4, characterised in that the side portions (7), the floor (8) and the roof (9) are secured to the back wall by means of at least some of the screws (4) inserted in the attachment elements.

6. Switchgear cabinet according to one of claims 1 to 5, characterised in that the roof (9) and the floor (8) each have on the front edge a flange (15) folded back at right angles twice towards the interior of the housing so that the region which forms the free edge of the flange extends in a plane parallel to that of the floor or of the roof and projects forwards beyond the side walls (7).

7. Switchgear cabinet according to one of claims 1 to 6, characterised in that in the region of the flanges (15) which form the free edges holes are provided at least in its ends which face towards the side portions (7).

8. Switchgear cabinet according to claim 7, characterised in that the door or each door is equipped on its engaging face with pin-type hinges (25) having pins (26) which project beyond the upper and lower edges of the door or each door and engage in the holes.

9. Switchgear cabinet according to claim 7, characterised in that the pins (26) of the hinges (25) can be displaced at will in the direction of their length so as to lie completely within the base area of the door or each door.

10. Switchgear cabinet according to claim 9, characterised in that the pins (26) can be secured in both positions.

11. Switchgear cabinet according to one of claims 1 to 10, characterised in that the inner faces of the side portions (7), the floor (8) and the roof (9) are completely covered over by plastics internal profiles (43).

12. Switchgear cabinet according to claim 11, characterised in that the plastics internal profiles (43) have continuous forwardly projecting edges against which the door or each door engages in its closed position.

13. Switchgear cabinet according to claim 12, characterised in that flexible sealing lips (50) are provided on the front edges (49) of the plastics internal profiles.

14. Switchgear cabinet according to claim 13, characterised in that the back wall (1) comprises plastics, preferably recycled plastics, and that plastics screws are used for securing the attachment elements (10).

15. Switchgear cabinet according to one of claims 1 to 14, characterised in that components of identical construction are used for the right and left hand side portions.

16. Switchgear cabinet according to one of claims 1 to 15, characterised in that components of identical construction are used for the floor and the roof.

## Revendications

1. Armoire de branchement (100) pour des installations électriques que l'on peut mettre sur une paroi verticale, comprenant :
- un boîtier en forme de coffret, boîtier qui se compose d'une paroi arrière sensiblement plane (1), de parois latérales (7), d'un fond (8) et d'un couvercle (9) et que l'on peut fermer au moyen d'au moins une porte frontale (24),
- un support d'appareils (20) disposé dressé dans le boîtier de l'armoire et servant au montage des éléments électriques de branchement et des dispositifs de protection contre les contacts accidentels,
- des oeillets de montage (5), disposés sur la paroi arrière (1) pour mettre l'armoire de branchement (100) sur un mur,
- et des éléments de fixation (10), disposés sur la paroi arrière (1) du boîtier de l'armoire dans la zone des angles sur le côté qui constitue la paroi intérieure du côté arrière du boîtier de l'armoire et qui servent à la fixation de rails de support (2, 3), éléments de fixation qui comprennent des alésages filetés dans lesquels sont vissées les vis (4) qui passent à travers la paroi arrière (1) dont une partie au moins sert en même temps à la fixation des oeillets de montage (5),
caractérisée en ce que
- les rails de support (2, 3) sont constitués sous la forme de profilés en U,
- les éléments de fixation (10) présentent des ailes de fixation (11) qui s'étendent depuis la paroi arrière (1) à l'intérieur de l'armoire de branchement, et qui viennent en prise dans les rails de support (2, 3) ayant la forme de profilés en U,
- une zone terminale d'un rail de support horizontal et d'un rail de support vertical (2, 3) est respectivement fixée à chaque élément de fixation (10), et les rails de support sont constitués soit sous la forme d'une partie du support des appareils (20) lui-même, soit en tant que rails de montage pour le support des appareils.

2. Armoire de branchement selon la revendication 1,
caractérisée en ce que
les parois latérales (7), le fond (8) et le couvercle (9) sont en tôle et en ce qu'au moins quelques uns des bords de préférence tous les bords des tôles présentent des zones repliées à angle droit de telle sorte que sur chaque bord du boîtier une zone repliée à angle droit vient en recouvrement avec la paroi adjacente respectivement et en ce que des moyens sont prévus pour fixer au choix les parois adjacentes sur les zones repliées à angle droit.

3. Armoire de branchement selon la revendication 1 ou 2,
caractérisée en ce que
l'on peut appliquer au moins une porte frontale (24) avec des éléments à charnière qui peuvent être montés, prêts à fonctionner, sur le boîtier.

4. Armoire de branchement selon l'une des revendications 1 à 3,
caractérisée en ce que
les moyens pour fixer les parties latérales sur le couvercle et sur le fond sont des vis autotaraudeuses (18).

5. Armoire de branchement selon l'une des revendications 1 à 4,
caractérisée en ce que
les parties latérales (7), le fond (8 et le couvercle (9) sont fixés sur la paroi arrière au moyen de quelques unes des vis (4) qui sont vissées dans les éléments de fixation.

6. Armoire de branchement selon l'une des revendications 1 à 5,
caractérisée en ce que
le couvercle (9) et le fond (8) présentent respectivement sur le bord avant un bord de repliage à angle droit (15) vers l'intérieur du boîtier de telle sorte que la zone qui constitue le bord libre du repliage s'étend dans un plan parallèle à celui du fond ou du couvercle et vient en saillie vers l'avant sur les parois latérales (7).

7. Armoire de branchement selon l'une des revendications 1 à 6,
caractérisée en ce que
dans la zone des repliages (15) qui constitue le bord libre, il est prévu des alésages au moins à ses extrémités tournées vers les parties latérales (7).

8. Armoire de branchement selon la revendication 7,
caractérisée en ce que
la porte ou les portes sont équipées, sur leur côté venant en butée, de charnières à fiche (25), qui comprennent des tétons (26) qui viennent en prise sur le bord supérieur ou le bord inférieur de la porte ou des portes.

9. Armoire de branchement selon la revendication 7,
caractérisée en ce que
les tétons (26) des charnières à fiche (25) peuvent être déplacés à volonté dans leur sens longitudinal d'une manière telle qu'ils restent complètement dans la face de base de la porte ou des portes.

10. Armoire de branchement selon la revendication 9,
caractérisée en ce que
les tétons (26) peuvent être fixés dans deux positions.

11. Armoire de branchement selon l'une des revendications 1 à 10,
caractérisée en ce que
les faces intérieures des parties latérales (7) du fond (8) et du couvercle (9) sont complètement recouvertes par des profilés intérieurs (43) en matière plastique.

12. Armoire de branchement selon la revendication 11,
caractérisée en ce que
les profilés intérieurs en matière plastique (43) présentent des bords (49) qui vont de bout à bout, faisant saillie en avant, bords sur lesquels reposent la porte ou les portes en position fermée.

13. Armoire de branchement selon la revendication 12,
caractérisée en ce que
sur les bords antérieurs (49) des profilés intérieurs en matière plastique, sont prévues des lèvres d'étanchéité (50) flexibles.

14. Armoire de branchement selon la revendication 13,
caractérisée en ce que
la paroi arrière (1) est en matière plastique, de préférence recycler et en ce que pour fixer les éléments de fixation (10) on utilise des vis en matière plastique:

15. Armoire de branchement selon l'une des revendications 1 à 14,
caractérisée en ce que
pour la pièce latérale de droite et pour la pièce latérale de gauche, on utilise des pièces de construction identiques.

16. Armoire de branchement selon l'une des revendications 1 à 15,
caractérisée en ce que
pour le fond et le couvercle, on utilise des pièces de construction identiques.
